# EUROPEAN PATENT APPLICATION

(11) **EP 4 807 937 A1**
(43) Date of publication of application: **16.09.2026**
(21) Application number: 24890824.6
(22) Date of filing: 15.11.2024
(51) Int. Cl.: H02J 3/32

(54) **NEW ENERGY STORAGE SYSTEM, ENERGY STORAGE OPERATION METHOD AND APPARATUS THEREFOR, AND COMPUTER DEVICE**

(30) Priority: 15.11.2023 CN 202311525009
(71) Applicant: Contemporary Amperex Future Energy Research Institute (Shanghai) Limited, Shanghai 200241 (CN); Contemporary Amperex Technology Co., Limited, Ningde, Fujian 352100 (CN)
(72) Inventor: LIANG, Liliuyuan, Shanghai 200241 (CN); ZONG, Yanyun, Shanghai 200241 (CN); PENG, Hao, Shanghai 200241 (CN); XU, Xiangxiang, Shanghai 200241 (CN); LIN, Hongfei, Shanghai 200241 (CN); YUAN, Xiaotian, Shanghai 200241 (CN); YU, Dongxu, Shanghai 200241 (CN); WANG, Sheng, Shanghai 200241 (CN); WEI, Chao, Shanghai 200241 (CN)
(74) Representative: Gong, Jinping
(86) International application number: PCT/CN2024/132352
(87) International publication number: WO 2025/103472

(57) **Abstract**

This application relates to a new energy storage system and an energy storage operation method and device thereof, a computer device, a storage medium, and a computer program product. A new energy generation module is integrated with a power module and a battery module to build a new energy submodule. The power module and the new energy generation module within the new energy submodule are both connected to a control apparatus, thereby constructing a modular new energy storage system.

## Description

### CROSS-REFERENCE TO RELATED APPLICATIONS

This application claims priority to Chinese Patent Application No. 202311525009.X, filed on November 15, 2023 and entitled "NEW ENERGY STORAGE SYSTEM AND ENERGY STORAGE OPERATION METHOD AND APPARATUS THEREOF, AND COMPUTER DEVICE", which is incorporated herein by reference in its entirety.

### TECHNICAL FIELD

This application relates to the field of energy storage technology, and in particular, to a new energy storage system and an energy storage operation method and apparatus thereof, a computer device, a storage medium, and a computer program product.

### BACKGROUND

Energy storage provides applications such as frequency regulation and peak shaving in various aspects of power systems, including generation, transmission, distribution, and consumption. It plays a role in stabilizing grid frequency, alleviating grid congestion, enhancing flexibility in power generation and consumption, and the like, bringing significant convenience to daily production and life. With the continuous development of energy storage technology and the proposal of sustainable development, new energy storage systems, due to their advantages of being green, pollution-free, low-carbon, environmentally friendly, and clean and renewable, have become a current research hotspot with broad application prospects.

However, in related technologies, new energy storage systems require manual scheduling operations, resulting in low scheduling efficiency.

### SUMMARY

In view of this, there is a need to provide a new energy storage system and an energy storage operation method and apparatus thereof, a computer device, a storage medium, and a computer program product, so as to alleviate the issue of low scheduling efficiency in new energy storage systems.

This application provides a new energy storage system, including a control apparatus and a new energy submodule. The new energy submodule includes a power module, a battery module, and a new energy generation module. The battery module is connected to both the power module and the new energy generation module. Power modules of adjacent new energy submodules are sequentially cascaded and connected to a grid system. The power module and the new energy generation module are both connected to the control apparatus.

In the foregoing new energy storage system, the new energy generation module is integrated with the power module and the battery module to build the new energy submodule. The power module and the new energy generation module within the new energy submodule are both connected to the control apparatus, thereby constructing a modular new energy storage system. In this way, under the control of the control apparatus, the switch-in/out operation of the new energy submodule in the new energy storage system can be automatically realized without manual intervention, effectively alleviating the problem of low scheduling efficiency in new energy storage systems.

In some embodiments, the new energy submodule further includes a converter, where the battery module is connected to the new energy generation module through the converter, and the converter is connected to the control apparatus.

In the above solution, a converter is further connected between the new energy generation module and the battery module. Through the converter, the electric energy generated by the new energy generation module can be converted into electric energy suitable for storage in the battery module, thereby improving the reliability of electric energy storage.

In some embodiments, the converter includes at least one of a direct current converter and an alternating current/direct current converter.

In the above solution, the converter can be configured as a direct current converter and/or an alternating current/direct current converter based on actual conditions, so that alternating current or direct current generated by the new energy generation module can be effectively converted and stored in the battery module, further enhancing the reliability of electric energy storage.

In some embodiments, power modules of adjacent new energy submodules are sequentially cascaded and connected to a grid system.

In the above solution, the new energy storage system includes multiple new energy submodules, the new energy submodules are sequentially cascaded through the power modules, and the cascaded structure is then connected to the grid system. In this manner, the new energy storage system supplies power to the grid system, providing assurance for the long-term and stable operation of the grid system.

In some embodiments, the new energy generation module includes at least one of a photovoltaic generation module, a wind power generation module, a tidal energy generation module, and a biomass energy generation module.

In the above solution, at least one of a photovoltaic generation module, a wind power generation module, a tidal energy generation module, and a biomass energy generation module can be used as the new energy generation module in the new energy submodule based on actual needs. This effectively broadens the ways of acquiring electric energy for the new energy storage system and improves the reliability of power generation in the new energy storage system.

This application further provides an energy storage operation method, including: determining, based on a power demand parameter of a grid system, an operation state of the grid system; and controlling switch-in/out operation of a new energy submodule based on the operation state, in combination with a battery availability score and a submodule availability score of the new energy submodule.

In the above energy storage operation method, in a case that the new energy storage system is connected to the grid system for operation, the operation state of the grid system can be determined based on the power demand parameter of the grid system. Subsequently, the switch-in/out operation of each new energy submodule in the new energy storage system is controlled based on the operation state of the grid system, as well as the battery availability score and the submodule availability score of the new energy submodule. In this way, the switch-in/out operation of the new energy submodule in the new energy storage system can be automatically matched and controlled based on the operation state of the grid system without manual intervention, alleviating the problem of low scheduling efficiency in new energy storage systems.

In some embodiments, the operation state includes power absorbing operation, and the controlling switch-in/out operation of a new energy submodule based on the operation state, in combination with a battery availability score and a submodule availability score of the new energy submodule includes: when the grid system is in the power absorbing operation, acquiring an output state parameter of a new energy generation module of the new energy submodule; and controlling the switch-in/out operation of the new energy submodule based on the power demand parameter and the output state parameter, in combination with the battery availability score and the submodule availability score of the new energy submodule.

In the above solution, in a case that the grid system is in power absorbing operation, the switch-in/out control of the new energy submodule can be performed based on the output state parameter of the new energy generation module of the new energy storage system and the power demand parameter of the grid system. This makes the switch-in/out of the new energy submodule more aligned with the operation of the new energy storage system, improving the switch-in/out reliability of the new energy submodule during power absorbing operation.

In some embodiments, the controlling the switch-in/out operation of the new energy submodule based on the power demand parameter and the output state parameter, in combination with the battery availability score and the submodule availability score of the new energy submodule includes: in a case that power demand parameter and the output state parameter are not equal, controlling switch-in/out operation of a current new energy submodule based on a battery availability score and a submodule availability score corresponding to the current new energy submodule of the new energy storage system.

In the above solution, during the switch-in/out control of the new energy submodule based on the power demand parameter and the output state parameter, if the power demand parameter and the output state parameter are not equal, the switch-in/out operation of the current new energy submodule needs to be controlled further based on the battery availability score and the submodule availability score of the current new energy submodule, improving the accuracy of switch-in/out control for the current new energy submodule.

In some embodiments, the operation state includes power emitting operation, and the controlling switch-in/out operation of a new energy submodule based on the operation state, in combination with a battery availability score and a submodule availability score of the new energy submodule includes: in a case that the grid system is in the power emitting operation, controlling switch-in/out operation of a current new energy submodule based on a battery availability score and a submodule availability score corresponding to the current new energy submodule of the new energy storage system.

In the above solution, in a case that the grid system is in the power emitting operation, the switch-in/out control of the current new energy submodule can be performed based on the battery availability score and the submodule availability score corresponding to the current new energy submodule, improving the switch-in/out accuracy of the new energy submodule during power emitting operation.

In some embodiments, the controlling switch-in/out operation of the current new energy submodule based on a battery availability score and a submodule availability score corresponding to the current new energy submodule of the new energy storage system includes: acquiring the submodule availability score corresponding to the current new energy submodule of the new energy storage system; in a case that the submodule availability score is zero, reducing the number of available submodules of the new energy storage system by one; in a case that the number of available submodules is greater than the number of submodules required to be put into operation, controlling the current new energy submodule to be switched out of operation; acquiring the battery availability score corresponding to the current new energy submodule of the new energy storage system; and in a case that the battery availability score is not zero, controlling a new energy generation module of the current new energy submodule to charge a battery module of the current new energy submodule; or in a case that the battery availability score is zero, controlling the new energy generation module to operate in energy curtailment mode.

In the above solution, the number of available submodules can be determined based on the submodule availability score of the current new energy submodule; the switch-in/out control of the current new energy submodule is performed based on the number of available submodules and the number of submodules required to be put into operation; and the operation of the new energy generation module is controlled based on the battery availability score of the current new energy submodule. In a case that the current new energy submodule is switched out of operation, the new energy generation module of the new energy submodule can charge the battery module, maximizing the possibility of the new energy generation module operating without energy curtailment.

In some embodiments, after the acquiring the submodule availability score corresponding to the current new energy submodule of the new energy storage system, the method further includes: in a case that the submodule availability score is not zero, maintaining the number of available submodules of the new energy storage system unchanged; and in a case that the number of available submodules is greater than the number of submodules required to be put into operation, controlling the current new energy submodule to be switched into operation.

In the above solution, in a case that the submodule availability score of the current new energy submodule is not zero, the number of available submodules is maintained unchanged, and the switch-in control of the current new energy submodule is performed. This allows the new energy generation module to consistently operate in a maximum power tracking state, improving the utilization rate of the new energy generation module.

In some embodiments, in a case that the operation state includes power absorbing operation and the power demand parameter is less than the output state parameter, after the reducing the number of available submodules of the new energy storage system by one in a case that the submodule availability score is zero, or after the maintaining the number of available submodules of the new energy storage system unchanged in a case that the submodule availability score is not zero, the method further includes: outputting an increased-power operation request in a case that the number of available submodules is less than or equal to the number of submodules required to be put into operation; and returning to the step of determining, based on a power demand parameter of a grid system, an operation state of the grid system in a case that a confirmation instruction in response to the increased-power operation request is received.

In the above solution, in a case that the grid system is in power absorbing operation and the power demand parameter is less than the output state parameter, if the number of available submodules is less than or equal to the number of submodules required to be put into operation, it indicates that even if the current new energy submodule is switched into operation, the output of the new energy generation module is excessive. In this case, an increased-power operation request is output to enable the grid system to operate at increased power, consuming the electric energy output by the new energy generation module, thereby improving the utilization rate of electric energy.

In some embodiments, after the outputting an increased-power operation request in a case that the number of available submodules is less than or equal to the number of submodules required to be put into operation, the method further includes: in a case that a confirmation instruction in response to the increased-power operation request is not received, controlling the new energy generation module of the new energy submodule to operate at reduced load until the output state parameter is less than or equal to the power demand parameter.

In the above solution, if the grid system does not agree to the output increased-power operation request, the new energy generation module used for power generation in the new energy submodule is controlled to operate at reduced load, reducing the output electric energy of the new energy generation module, thereby improving the operational safety of the new energy storage system.

In some embodiments, in a case that the operation state includes power absorbing operation and the power demand parameter is greater than the output state parameter, after the reducing the number of available submodules of the new energy storage system by one in a case that the submodule availability score is zero, or after the maintaining the number of available submodules of the new energy storage system unchanged in a case that the submodule availability score is not zero, the method further includes: outputting a decreased-power operation request in a case that the number of available submodules is less than or equal to the number of submodules required to be put into operation; and returning to the step of determining, based on a power demand parameter of a grid system, an operation state of the grid system in a case that a confirmation instruction in response to the decreased-power operation request is received.

In the above solution, in a case that the grid system is in power absorbing operation and the power demand parameter is greater than the output state parameter, if the number of available submodules is less than or equal to the number of submodules required to be put into operation, it indicates that even if the current new energy submodule is switched into operation, the output of the new energy generation module cannot meet the demand. In this case, a decreased-power operation request is output to enable the grid system to operate at decreased power, reducing the consumption of electric energy output by the new energy generation module, thereby improving the operational reliability of the new energy storage system.

In some embodiments, after the outputting a decreased-power operation request in a case that the number of available submodules is less than or equal to the number of submodules required to be put into operation, the method further includes: in a case that a confirmation instruction in response to the decreased-power operation request is not received, controlling the new energy storage system to lock; acquiring the battery availability score corresponding to the current new energy submodule; and in a case that the battery availability score is not zero, controlling the new energy generation module of the current new energy submodule to charge the battery module of the current new energy submodule; or in a case that the battery availability score is zero, controlling the new energy generation module to operate in energy curtailment mode.

In the above solution, if the grid system does not agree to the output decreased-power operation request, the new energy storage system is controlled to lock, improving the operational safety of the new energy storage system. Through further analysis of the battery availability score of the current new energy submodule, the new energy generation module charges the battery module of the new energy submodule, maximizing the possibility of the new energy generation module operating without energy curtailment.

In some embodiments, the controlling the switch-in/out operation of the new energy submodule based on the power demand parameter and the output state parameter, in combination with the battery availability score and the submodule availability score of the new energy submodule further includes: in a case that the power demand parameter is equal to the output state parameter, controlling the current new energy submodule to be switched into operation.

In the above solution, in a case that the power demand parameter is equal to the output state parameter, the current new energy submodule is directly controlled to be switched into operation, providing electric energy to the grid system through the new energy generation module, thereby improving the utilization rate of the new energy generation module.

In some embodiments, in a case that the operation state includes power emitting operation, after the reducing the number of available submodules of the new energy storage system by one in a case that the submodule availability score is zero, or after the maintaining the number of available submodules of the new energy storage system unchanged in a case that the submodule availability score is not zero, the method further includes: outputting a control policy change request in a case that the number of available submodules is less than or equal to the number of submodules required to be put into operation; and returning to the step of acquiring an output state parameters of a new energy generation module of the new energy submodule in a case that a confirmation instruction in response to the control policy change request is received.

In the above solution, in the case of power emitting operation, if it is detected that the number of available submodules is less than or equal to the number of submodules required to be put into operation, the control policy is changed. Based on the received confirmation instruction, the process returns to the step of acquiring an output state parameter of a new energy generation module of the new energy storage system connected to the grid system, that is, performing switch-in/out control according to the control policy under power absorbing operation, improving the operational reliability of the new energy storage system.

In some embodiments, after the outputting a control policy change request in a case that the number of available submodules is less than or equal to the number of submodules required to be put into operation, the method further includes: in a case that a confirmation instruction in response to the control policy change request is not received, controlling the new energy storage system to lock; acquiring the battery availability score corresponding to the current new energy submodule; and in a case that the battery availability score is not zero, controlling the new energy generation module of the current new energy submodule to charge the battery module of the current new energy submodule; or in a case that the battery availability score is zero, controlling the new energy generation module to operate in energy curtailment mode.

In the above solution, if the output control policy change request is not approved, the new energy storage system is controlled to lock, improving the operational safety of the new energy storage system. Through further analysis of the battery availability score of the current new energy submodule, the new energy generation module charges the battery module of the new energy submodule, maximizing the possibility of the new energy generation module operating without energy curtailment.

In some embodiments, the method for determining the battery availability score includes: performing a weighted analysis based on at least one of a state of charge, a battery power capability parameter, and a battery health state of the current new energy submodule to determine the battery availability score.

In the above solution, a weighted calculation is performed based on at least one of the state of charge, the battery power capability parameter, and the battery health state to obtain the battery availability score, making the battery availability score match the current new energy submodule, thereby improving the accuracy of the battery availability score.

In some embodiments, a method for determining the submodule availability score includes: determining a charge-discharge battery demand parameter based on the power demand parameter and the output state parameter; and performing a weighted analysis based on at least one of the charge-discharge battery demand parameter, an output performance parameter of the new energy generation module in the current new energy submodule, and the state of charge, the battery power capability parameter, a battery charge-discharge current, and the battery health state of the current new energy submodule to determine the submodule availability score.

In the above solution, a weighted calculation is performed based on at least one of the charge-discharge battery demand parameter, the output performance parameter of the new energy generation module, the state of charge, the battery power capability parameter, the battery charge-discharge current, and the battery health state to obtain the submodule availability score, making the submodule availability score more aligned with the new energy storage system, thereby improving the accuracy of the submodule availability score.

This application further provides an energy storage operation apparatus including: an operation determining module configured to determine, based on a power demand parameter of a grid system, an operation state of the grid system; and a switch-in/out control module configured to control switch-in/out operation of a new energy submodule based on the operation state, in combination with a battery availability score and a submodule availability score of the new energy submodule.

This application further provides a computer device including a memory and a processor. The memory stores a computer program, and when the processor executes the computer program, the steps of the foregoing energy storage operation method are implemented.

This application further provides a computer-readable storage medium having a computer program stored thereon. When the computer program is executed by a processor, the steps of the foregoing energy storage operation method are implemented.

This application further provides a computer program product including a computer program. When the computer program is executed by a processor, the steps of the foregoing energy storage operation method are implemented.

### BRIEF DESCRIPTION OF DRAWINGS

To describe the technical solutions in the embodiments of this application more clearly, the following briefly describes the accompanying drawings for describing the embodiments. Apparently, the accompanying drawings in the following description show merely some embodiments of this application, and persons of ordinary skill in the art may still derive other accompanying drawings from these accompanying drawings without creative efforts. In the drawings:
FIG. 1 is a schematic structural diagram of a new energy storage system according to some embodiments of this application;
FIG. 2 is a schematic structural diagram of a new energy storage system according to some other embodiments of this application;
FIG. 3 is a schematic flowchart of an energy storage operation method according to some embodiments of this application;
FIG. 4 is a schematic flowchart of an energy storage operation method according to some other embodiments of this application;
FIG. 5 is a schematic flowchart of an energy storage operation method according to still some embodiments of this application;
FIG. 6 is a schematic flowchart of an energy storage operation method according to yet some embodiments of this application;
FIG. 7 is a schematic flowchart of a switch-in/out control process according to some other embodiments of this application;
FIG. 8 is a schematic flowchart of a switch-in/out control process according to still some embodiments of this application;
FIG. 9 is a schematic flowchart of a switch-in/out control process according to yet some embodiments of this application;
FIG. 10 is a schematic flowchart of a switch-in/out control process in a power absorbing state according to some embodiments of this application;
FIG. 11 is a schematic flowchart of a switch-in/out control process according to yet some embodiments of this application;
FIG. 12 is a schematic flowchart of a switch-in/out control process in a power absorbing state according to some other embodiments of this application;
FIG. 13 is a schematic flowchart of a switch-in/out control process according to some other embodiments of this application;
FIG. 14 is a schematic flowchart of a switch-in/out control process according to still some embodiments of this application;
FIG. 15 is a schematic flowchart of a switch-in/out control process in a power emitting state according to some embodiments of this application;
FIG. 16 is a schematic flowchart of an operation state determination process according to some embodiments of this application;
FIG. 17 is a schematic structural diagram of an energy storage operation apparatus according to some embodiments of this application; and
FIG. 18 is a schematic diagram of the internal structure of a computer device according to some embodiments of this application.

### DESCRIPTION OF EMBODIMENTS

The following describes in detail the embodiments of technical solutions of this application with reference to the accompanying drawings. The following embodiments are only used to more clearly illustrate the technical solutions of this application and are therefore only examples, and cannot be used to limit the scope of protection of this application.

Unless otherwise defined, all technical and scientific terms used herein have the same meaning as commonly understood by those skilled in the technical field of this application. The terms used herein are only for the purpose of describing specific embodiments and are not intended to limit this application. The terms "include" and "have" and any variations thereof in the description, claims, and the above description of the drawings of this application are intended to cover non-exclusive inclusion.

The reference to "embodiment" herein means that a particular feature, structure, or characteristic described in connection with the embodiment may be included in at least one embodiment of this application. The appearance of this phrase in various places in the specification does not necessarily refer to the same embodiment, nor is it an independent or alternative embodiment mutually exclusive with other embodiments. Those skilled in the art explicitly and implicitly understand that the embodiments described herein can be combined with other embodiments.

At present, from the perspective of market development, the application of energy storage systems is becoming increasingly widespread, bringing significant convenience to daily production and life. Among various energy storage technologies, high-voltage direct-connected energy storage, due to its highly modular structure, can meet the demands for high efficiency, high reliability, cost-effectiveness, and safety, and has been gradually developed and applied.

High-voltage direct-connected energy storage systems integrate a voltage source converter valve (also known as a VSC converter valve) and an energy storage valve. Specifically, the energy storage valve is connected between the VSC converter valves at two ends of the grid, and two ends of the energy storage valve are connected to the grid bus, thereby implementing connection into the grid system for operation. When this type of high-voltage direct-connected energy storage system operates in parallel with the grid, a new energy generation module is typically connected at the energy storage valve, forming a new energy storage system. This new energy storage system can generate power through the new energy generation module to charge the battery module of the energy storage valve, effectively improving energy utilization.

The energy storage valve typically includes multiple cascaded energy storage valve submodules. When the new energy storage system is connected to the grid system for parallel operation, it is often necessary to adjust the switch-in and switch-out of the energy storage valve submodules in the new energy storage system based on the actual needs of the grid system. In related technologies, the switch-in and switch-out of each energy storage valve submodule usually require manual scheduling. This scheduling method not only results in low scheduling efficiency but also is error-prone, making it difficult to ensure scheduling precision and accuracy.

To alleviate the above issues, research has found that the new energy generation module can be integrated with the energy storage valve. Specifically, the new energy generation modules are distributed across all energy storage valve submodules to form new energy submodules, and the new energy submodules are connected to a control apparatus, thereby constructing a modular new energy storage system. The switch-in and switch-out operation of each new energy submodule is automatically controlled through the control apparatus, to change the connection state of the new energy generation module, thereby controlling the operation of the new energy storage system.

Based on the above considerations, this application provides a new energy storage system in which a new energy generation module is integrated with a power module and a battery module to build a new energy submodule, and power modules of adjacent new energy submodules are sequentially cascaded and connected to a grid system. The power module and the new energy generation module within the new energy submodule are both connected to a control apparatus, thereby constructing a modular new energy storage system.

Through the above approach, under the control of the control apparatus, the switch-in/out operation of the new energy submodule in the new energy storage system can be automatically realized without manual intervention, effectively alleviating the problem of low scheduling efficiency in new energy storage systems.

The new energy storage system of this application is not limited to a single specific application scenario. It can be applied to high-voltage direct-connected energy storage scenarios, medium- to high-voltage AC cascaded energy storage scenarios, MMC (Modular Multilevel Converter, modular multilevel converter) AC energy storage scenarios, low-voltage energy storage scenarios, or the like, which is not specifically limited. For ease of understanding the technical solutions of this application, the following description is based on the new energy storage system being applied in a high-voltage direct-connected energy storage scenario.

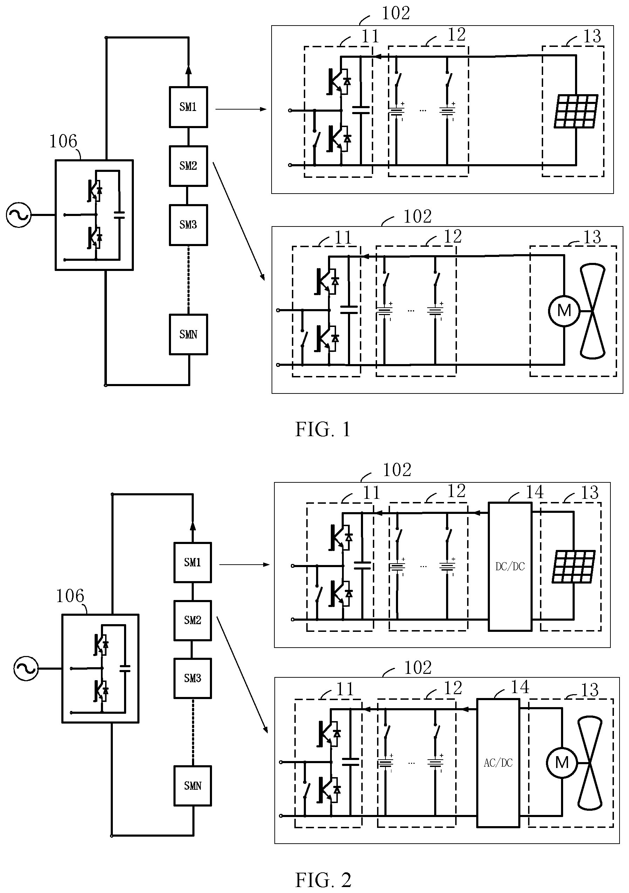

Referring to FIG. 1, this application provides a new energy storage system, including a control apparatus (not shown) and a new energy submodule 102. The new energy submodule 102 includes a power module 11, a battery module 12, and a new energy generation module 13. The battery module 12 is connected to both the power module 11 and the new energy generation module 13. The power module 11 and the new energy generation module 13 are both connected to the control apparatus.

The power module 11 is an apparatus for implementing power conversion; the battery module 12 is an apparatus for storing and releasing electric energy; and the new energy generation module 13 is an apparatus capable of generating power through new energy technology. The new energy generation module 13 can charge the battery module 12 of the new energy submodule 102 and can also directly output electric energy to the grid system to supply power to the grid system. The power module 11 can be a half-bridge power module or a full-bridge power module based on actual needs, which is not specifically limited. FIG. 1 uses a half-bridge structure power module for illustration. The battery module 12 may be a single battery or a battery pack formed by multiple batteries connected in series and/or in parallel, which is not specifically limited.

The method by which the control apparatus controls the switch-in and switch-out of the new energy submodule 102 is not limited. In some embodiments, in a case that the new energy storage system is connected to the grid system for operation, a current operation state of the grid system can be determined based on a power demand parameter of the grid system. Subsequently, based on the operation state of the grid system, a control policy is determined to control the switch-in/out operation of each new energy submodule 102 in the new energy storage system.

In the foregoing new energy storage system, the new energy generation module 13 is integrated with the power module 11 and the battery module 12 to build the new energy submodule 102. The power module 11 and the new energy generation module 13 within the new energy submodule 102 are both connected to the control apparatus, thereby constructing a modular new energy storage system. In this way, under the control of the control apparatus, the switch-in/out operation of the new energy submodule 102 in the new energy storage system can be automatically realized without manual intervention, effectively alleviating the problem of low scheduling efficiency in new energy storage systems.

Referring to FIG. 2, in some embodiments, the new energy submodule 102 further includes a converter 14. The battery module 12 is connected to the new energy generation module 13 through the converter 14, and the converter 14 is connected to the control apparatus (not shown in the figure).

The converter 14 is a device that transforms AC voltage or DC voltage to obtain and output a suitable DC voltage. During the operation of the new energy storage system, the electric energy generated by the new energy generation module 13 in the new energy submodule 102 can not only be transmitted to the grid system to supply power to loads but also be transmitted to the battery module 12 for storage. Considering the poor stability of the electric energy generated by the new energy generation module 13, to implement reliable storage of electric energy and improve operational safety of the battery module 12, the converter 14 can be arranged between the battery module 12 and the new energy generation module 13. Through the converter 14, the electric energy generated by the new energy generation module 13 is converted into electric energy suitable for the battery module 12 for transmission. With the arrangement of the converter 14, maximum power tracking can also be implemented in the new energy storage system, allowing the new energy generation module 13 to operate in a maximum power point tracking state.

In the above solution, a converter 14 is further connected between the new energy generation module 13 and the battery module 12. Through the converter 14, the electric energy generated by the new energy generation module 13 can be converted into electric energy suitable for storage in the battery module 12, improving the reliability of electric energy storage.

In some embodiments, the converter 14 includes at least one of a direct current converter and an alternating current/direct current converter.

The direct current converter, namely a DC/DC (Direct Current/Direct Current) converter, is a device that converts direct current into direct current of different voltages. The alternating current/direct current converter, namely an AC/DC (Alternating Current/Direct Current) converter, is a device that converts alternating current into direct current. In the solution of this embodiment, within a same new energy submodule 102, only one direct current converter or one alternating current converter may be provided, or both an alternating current converter and a direct current converter may be provided, which can be selected based on actual needs.

It should be noted that the direct current converter is not limited to a specific type and may be a non-isolated DC/DC converter, a boost circuit (BOOST circuit), buck circuit (BUCK circuit), or isolated converter, a phase-shifted full-bridge converter, or the like, which is not specifically limited.

In the above solution, the converter 14 can be configured as a direct current converter and/or an alternating current/direct current converter based on actual conditions, so that alternating current or direct current generated by the new energy generation module 13 can be effectively converted and stored in the battery module 12, further enhancing the reliability of electric energy storage.

In some embodiments, power modules 11 of adjacent new energy submodules 102 are sequentially cascaded and connected to the grid system.

The number of new energy submodules 105 is not limited. To meet system scheduling needs, in the solution of this embodiment, two or more new energy submodules 102 are arranged in the new energy storage system, and the new energy submodules 102 are sequentially cascaded. Specifically, the new energy submodules 102 are cascaded through the power modules 11. Referring to FIG. 1 or FIG. 2, in the power module 11 of each new energy submodule 102, two alternating current terminals of the power module 11 (that is, the terminals of the power module 11 far from the energy storage module 12) are connected to one alternating current terminal of the power module 11 of one adjacent new energy submodule 102, thereby completing the cascading of the new energy submodules 102. Ultimately, the two ends of the cascaded structure of the new energy submodules 102 (that is, the energy storage valve) are connected to the alternating current grid.

It can be understood that in some embodiments, the new energy storage system may further include a converter 106, and two ends of the cascaded new energy submodules 102 are connected to the converter 106 and the grid system. The modular design of the new energy submodules 102 allows different numbers of new energy submodules 102 to be put into operation based on actual operational needs in practical scenarios.

In the above solution, the new energy storage system includes multiple new energy submodules 102, and the new energy submodules 102 are sequentially cascaded through the power modules 11. The cascaded structure is then connected to the grid system. In this manner, the new energy storage system supplies power to the grid system, providing assurance for the long-term and stable operation of the grid system.

In some embodiments, the new energy generation module 13 includes at least one of a photovoltaic generation module, a wind power generation module, a tidal energy generation module, and a biomass energy generation module.

The new energy generation module 13 is not limited to a specific type and may be any one or more of a photovoltaic generation module, a wind power generation module, a tidal energy generation module, and a biomass energy generation module. Moreover, within a same new energy submodule 102, one or more new energy generation modules 13 can be arranged, and the types of the respective new energy generation modules 13 may be the same or different, which is not specifically limited. For ease of understanding, in the following embodiments, one new energy generation module 13 is arranged inside one new energy submodule 102, and the new energy generation modules 13 in the new energy submodules 102 may be the same or not entirely the same, which can be selected based on actual needs.

In the above solution, the new energy generation module 13 in the new energy submodule 102 can be at least one of a photovoltaic generation module, a wind power generation module, a tidal energy generation module, and a biomass energy generation module based on actual needs. This effectively broadens the ways of acquiring electric energy for the new energy storage system and improves the reliability of power generation in the new energy storage system.

In some embodiments, the description is provided using an example in which the new energy generation module 13 includes a photovoltaic generation module and a wind power generation module, and the new energy submodule 102 is connected to the photovoltaic generation module and the wind power generation module. To enable the electric energy transmitted from the photovoltaic generation module to the new energy submodule 102 to be received and utilized by the battery module 12 of the new energy submodule 102, a direct current converter (DC/DC) can be provided between the photovoltaic generation module and the battery module 12. To enable the electric energy transmitted from the wind power generation module to the new energy submodule 102 to be received and utilized by the battery module 12 of the new energy submodule 102, an alternating current/direct current converter (AC/DC) can be arranged between the wind power generation module and the battery module 12. Through the arrangement of DC/DC and AC/DC converters, the output of the photovoltaic generation module can be controlled through MPPT (Maximum Power Point Tracking, maximum power point tracking), improving the utilization rate of the photovoltaic generation module; or the output of the wind power generation module can be controlled through MPPT, improving the utilization rate of the wind power generation module.

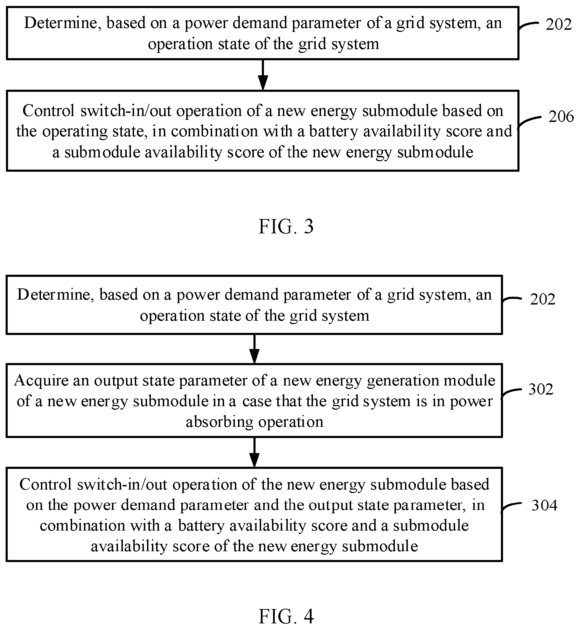

Referring to FIG. 3, this application provides an energy storage operation method based on the foregoing new energy storage system, including Step 202 and Step 206.

Step 202. Determine, based on a power demand parameter of a grid system, an operation state of the grid system.

The grid system is a power network system formed by various electric loads and power sources and used to consume electric energy and/or store electric energy. The power demand parameter is a state parameter that the grid system needs to achieve when there is a power demand (power requirement) from the electric loads or power sources in the grid system.

The operation state is a state of the grid system emitting power or absorbing power, including power absorbing operation and power emitting operation. Power absorbing operation refers to a state that the grid system receives output voltage and current from the new energy storage system to supply power to loads. Emitting power refers to an operation state that the grid system outputs voltage and current to the new energy storage system to charge the new energy storage system. As the operation of the new energy storage system differs under the two different states of power emitting operation and power absorbing operation of the grid, the solution of this embodiment needs to first determine the operation state of the grid system based on the power demand parameter.

It should be noted that the method of acquiring the power demand parameters is not limited. In some embodiments, the control apparatus of the new energy storage system can communicate with the grid system, and the grid system can perform analysis and calculation based on the connected loads to obtain the power demand parameter, which is then sent to the control apparatus.

It can be understood that the power demand parameter is not limited to a specific type, as long as it can reasonably represent the state parameter required by the grid system. For example, in some embodiments, the power demand parameter includes at least one of a power parameter and a current parameter. The power parameter is a power value corresponding to the power demand required during grid system scheduling, which can be obtained by collecting the rated power of each electric load in the grid system. The current parameter is a current value corresponding to the power demand required during grid system scheduling. Since the electric loads in the grid system generally operate in parallel (thus, the current parameter can be used to adjust the power demand), with consistent voltages (for example, all are mains voltage), the current parameter can be calculated based on the power parameter and voltage without additional detectors, effectively saving costs. In other embodiments, to improve the accuracy of the current parameter, a current detector can also be provided in the grid system to collect the current parameter, which is not specifically limited.

Step 206. Control switch-in/out operation of a new energy submodule based on the operation state, in combination with a battery availability score and a submodule availability score of the new energy submodule.

The new energy storage system is an energy storage system connected to devices related to new energy generation. The current new energy submodule is a new energy submodule that currently needs switch-in/out control. The battery availability score, also known as a battery capability score of the current new energy submodule, is used to indicate whether the battery module of the current new energy submodule is available. It can be represented as ${SOX}_{sm , bat}^{j}$, which can be understood as a normalized parameter of the battery capability of the *j*-th new energy submodule. This parameter is obtained by evaluating the battery performance of the battery module of the new energy submodule during charging and discharging. A non-zero battery availability score indicates that the battery module of the current new energy submodule is available, and in this state, the battery module can be charged and discharged. A zero battery availability score indicates that the battery module of the current new energy submodule is not available, and in this case, the battery module cannot be charged or discharged.

The submodule availability score is a capability score of the current new energy submodule, used to indicate whether the current new energy submodule is available. It can be represented as ${SOY}_{sm}^{j}$ , which can be understood as a normalized parameter of the comprehensive capability (including the battery module, the power module, and the like) of the *j*-th new energy submodule. This parameter is obtained by evaluating the output capability of the new energy generation module and the comprehensive performance of the battery module. A non-zero submodule availability score indicates that the current new energy submodule is available, and in this state, the new energy submodule can be connected to the new energy storage system for operation. A zero submodule availability score indicates that the current new energy submodule is not available, and in this case, the current new energy submodule cannot be connected to the new energy storage system for operation.

In some embodiments, if the submodule availability score only considers the battery module part and ignores the influence of the new energy generation module, the value of ${SOY}_{sm}^{j}$ can be equivalently set to ${SOX}_{sm , bat}^{j}$.

After the control apparatus of the new energy storage system acquires the operation state of the grid system, a control policy is configured for the new energy storage system based on the current operation state. The control is performed in combination with the battery availability score and the submodule availability score of the new energy submodule, so that the new energy submodule of the new energy storage system switches in or out according to the control policy, implementing automatic switch-in/out control of the new energy submodule.

In the above energy storage operation method, in a case that the new energy storage system is connected to the grid system for operation, the operation state of the current grid system can be determined based on the power demand parameter of the grid system. Subsequently, based on the operation state of the grid system, a control policy is determined to control the switch-in/out operation of each new energy submodule in the new energy storage system. In this way, the switch-in/out operation of the new energy submodule in the new energy storage system can be automatically matched and controlled based on the operation state of the grid system without manual intervention, alleviating the problem of low scheduling efficiency in new energy storage systems.

Referring to FIG. 4, in some embodiments, the operation state includes power absorbing operation, and Step 206 includes Step 302 and Step 304.

Step 302. Acquire an output state parameter of a new energy generation module of the new energy submodule in a case that the grid system is in power absorbing operation.

Step 304. Control switch-in/out operation of the new energy submodule based on the power demand parameter and the output state parameter, in combination with the battery availability score and the submodule availability score of the new energy submodule.

The output state parameter is a parameter related to the operation state of the new energy generation module when the new energy generation module outputs electric energy to the battery module of the new energy submodule and/or to the grid system. It should be noted that the output state parameter is not limited to a specific type, as long as it can reasonably represent the output operation state of the new energy generation module. For example, in some embodiments, the output state parameter includes output current or output power, which can be selected based on actual needs.

It can be understood that in some embodiments, the type of output state parameter needs to be the same as that of the power demand parameter, which means if the output state parameter adopted is the output power, the corresponding power demand parameter should also be a power parameter.

The method by which the control apparatus determines the operation state of the grid system based on the power demand parameters is not limited, and the determining method may vary depending on the power demand parameter. For example, if the power demand parameter is a power parameter, the grid system is considered to be in power absorbing operation in a case that the power parameter is greater than zero. If the power demand parameter is a current parameter, the grid system is considered to be in power absorbing operation in a case that the current parameter is greater than zero.

The solution of this embodiment is explained by taking the grid system in power absorbing operation as an example. In this state, the specific control policy matched is as follows: the control apparatus needs to first acquire the output state parameter of the new energy generation module of the new energy storage system, and then control the switch-in/out operation of the new energy submodule based on the output state parameter and the power demand parameter.

In the above solution, in a case that the grid system is in power absorbing operation, the switch-in/out control of the new energy submodule can be performed based on the output state parameter of the new energy generation module of the new energy storage system and the power demand parameter of the grid system. This makes the switch-in/out of the new energy submodule more aligned with the operation of the new energy storage system, improving the switch-in/out reliability of the new energy submodule during power absorbing operation.

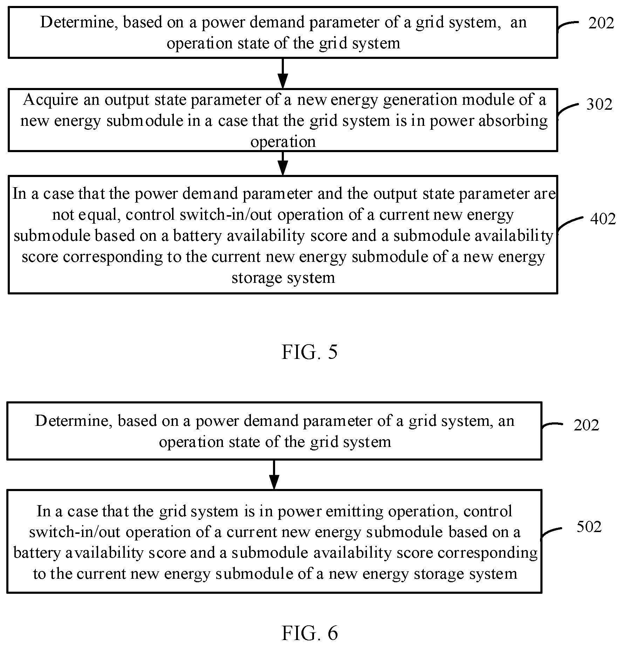

Referring to FIG. 5, in some embodiments, Step 304 includes Step 402.

Step 402. In a case that the power demand parameter and the output state parameter are not equal, control switch-in/out operation of a current new energy submodule based on a battery availability score and a submodule availability score corresponding to the current new energy submodule of the new energy storage system.

In the solution of the embodiments of this application, for each new energy submodule, switch-in/out control needs to be performed using the energy storage operation method. Each time when the switch-in/out control of one new energy submodule is completed, the control apparatus returns to the operation of determining, based on a power demand parameter of a grid system, an operation state of the grid system, and repeats the energy storage operation method to perform switch-in/out control on the next new energy submodule. The specific switch-in/out control needs to be judged based on the battery availability score and the submodule availability score of the current new energy submodule. In a case of different battery availability scores and/or submodule availability scores, the control policy of the control apparatus also differs. Ultimately, through this switch-in/out control method, the new energy generation module consistently operates in a maximum power point tracking state, alleviating the energy curtailment phenomenon in the new energy storage system.

In the above solution, during the switch-in/out control of the new energy submodule based on the power demand parameter and the output state parameter, if the power demand parameter and the output state parameter are not equal, the switch-in/out operation of the current new energy submodule needs to be controlled further based on the battery availability score and the submodule availability score of the current new energy submodule, improving the accuracy of switch-in/out control for the current new energy submodule.

Referring to FIG. 6, in some embodiments, the operation state includes power emitting operation, and Step 206 includes Step 502.

Step 502. In a case that the grid system is in the power emitting operation, control switch-in/out operation of a current new energy submodule based on a battery availability score and a submodule availability score corresponding to the current new energy submodule of the new energy storage system.

The method by which the control apparatus determines the operation state of the grid system based on the power demand parameter is not limited, and the determining method may vary depending on the power demand parameter. For example, if the power demand parameter is a power parameter, the grid system is considered to be in power emitting operation in a case that the power parameter is determined to be less than or equal to zero. If the power demand parameter is a current parameter, the grid system is considered to be in power emitting operation in a case that the current parameter is determined to be less than or equal to zero.

The solution of this embodiment is explained by taking the grid system in power emitting operation as an example. In this state, for each new energy submodule, the specific control policy matched is as follows: controlling the switch-in/out operation of the current new energy submodule based on the battery availability score and the submodule availability score of the current new energy submodule.

In the above solution, in a case that the grid system is in the power emitting operation, the switch-in/out control of the current new energy submodule can be performed based on the battery availability score and the submodule availability score corresponding to the current new energy submodule, improving the switch-in/out accuracy of the new energy submodule during power emitting operation.

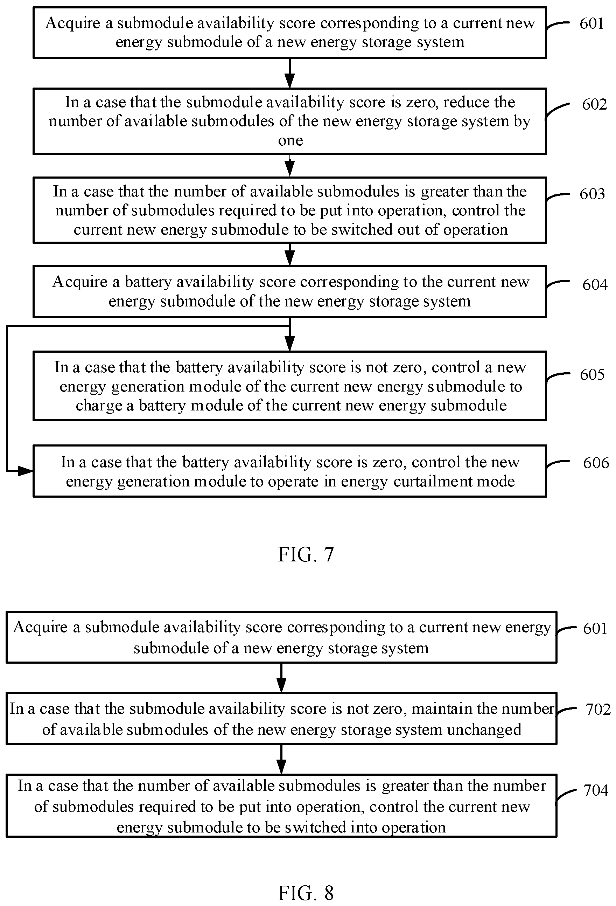

Whether in power emitting operation or power absorbing operation, the control apparatus performs the switch-in/out control of the current new energy submodule based on the submodule availability score and the battery availability score in similar ways. Referring to FIG. 7, in some embodiments, controlling the switch-in/out operation of the current new energy submodule based on the battery availability score and the submodule availability score corresponding to the current new energy submodule of the new energy storage system includes Step 601, Step 602, Step 603, Step 604, Step 605, and Step 606.

Step 601. Acquire the submodule availability score corresponding to the current new energy submodule of the new energy storage system.

Step 602. In a case that the submodule availability score is zero, reduce the number of available submodules of the new energy storage system by one.

Step 603. In a case that the number of available submodules is greater than the number of submodules required to be put into operation, control the current new energy submodule to be switched out of operation.

Step 604. Acquire the battery availability score corresponding to the current new energy submodule of the new energy storage system.

Step 605. In a case that the battery availability score is not zero, control a new energy generation module of the current new energy submodule to charge a battery module of the current new energy submodule.

Step 606. In a case that the battery availability score is zero, control the new energy generation module to operate in energy curtailment mode.

The number of available submodules is the number of new energy submodules that can be put into operation in the new energy storage system. Switching out of operation means controlling the current new energy submodule to exit the new energy storage system, which can be specifically implemented by controlling the on/off state of the switching device (such as an IGBT, insulated gate bipolar transistor) in the power module of the current new energy submodule. For ease of understanding, taking the power module in the current new energy submodule being a half-bridge structure as an example, during switching into operation, only the upper switch of the power module is turned on, and the lower switch is turned off; during switching out of operation, only the lower switch of the power module is turned on, and the upper switch is turned off.

The number of submodules required to be put into operation is the number of new energy submodules that need to be put into operation in a case that the grid system operates in the current state. The number of submodules required to be put into operation can be calculated based on the voltage demand of the grid system, which is not specifically limited. Energy curtailment operation refers to the forced abandonment of new energy generation due to certain reasons, by stopping the corresponding generating unit or reducing its power output. Its specific form may be wind curtailment, solar curtailment, or the like, varying with different new energy generation modules.

The control apparatus assumes by default that all new energy submodules can be put into operation. In actual scenarios, it is necessary to analyze the new energy submodules sequentially. Whenever it is determined that one new energy submodule cannot be put into operation, the number of available submodules is reduced by one. If it is determined that the current new energy submodule can be put into operation, there is no need to adjust the number of available submodules.

The control method of this embodiment is applicable to both power emitting operation and power absorbing operation of the grid system. In the specific control policy, the submodule availability score is first acquired. In a case that the submodule availability score is zero, indicating that the current new energy submodule is not available, the current new energy submodule needs to be switched out of the new energy system. In some embodiments, to reduce the occurrence of energy curtailment operation in the new energy storage system, the control apparatus acquires the battery availability score of the current new energy submodule to determine whether the battery module of the current new energy submodule is available. If the battery module is available, the new energy generation module is controlled to output electric energy to charge the current new energy submodule (its internal battery module); if the battery module is not available (including the case that the battery module is fully charged), the energy curtailment operation control of the new energy generation module is then executed.

In the above solution, the number of available submodules can be determined based on the submodule availability score of the current new energy submodule. The switch-in/out control of the current new energy submodule is performed based on the number of available submodules and the number of submodules required to be put into operation, and the operation of the new energy generation module is controlled based on the battery availability score of the current new energy submodule. In a case that the current new energy submodule is switched out of operation, the new energy generation module of the new energy submodule can charge the battery module of the new energy submodule, maximizing the possibility of the new energy generation module operating without energy curtailment.

Referring to FIG. 8, in some embodiments, after Step 601, the method further includes Step 702 and Step 704.

Step 702. In a case that the submodule availability score is not zero, maintain the number of available submodules of the new energy storage system unchanged.

Step 704. In a case that the number of available submodules is greater than the number of submodules required to be put into operation, control the current new energy submodule to be switched into operation.

Switching into operation means connecting the new energy submodule to the new energy storage system for operation. In a case that the control apparatus analyzes that the submodule availability score is not zero, it indicates that the current new energy submodule can be put into operation in the new energy storage system. In the current state, if it is detected that the number of available submodules is greater than the number of submodules required to be put into operation, the current new energy submodule is directly put into operation in the new energy storage system, and the storage operation control ends.

In the above solution, in a case that the submodule availability score of the current new energy submodule is not zero, the number of available submodules is maintained unchanged, and the switch-in control of the current new energy submodule is performed. This allows the new energy generation module to consistently operate in a maximum power tracking state, improving the utilization rate of the new energy generation module.

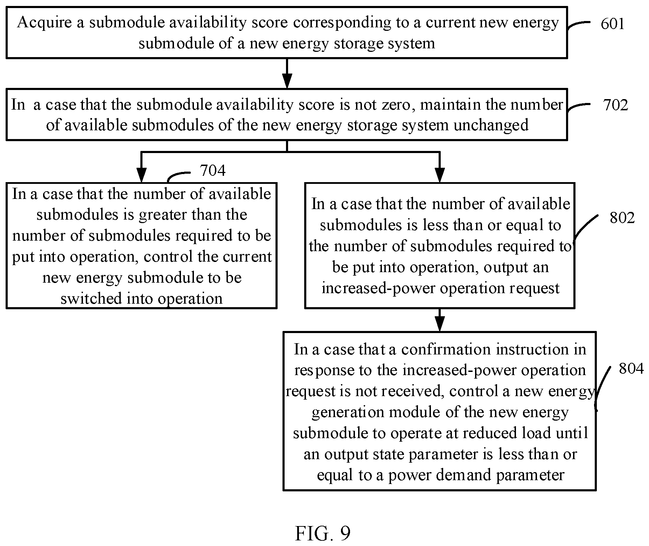

Referring to FIG. 9, in some embodiments, in a case that the operation state includes power absorbing operation and the power demand parameter is less than the output state parameter, after Step 602 or Step 702, the method further includes Step 802.

Step 802. Output an increased-power operation request in a case that the number of available submodules is less than or equal to the number of submodules required to be put into operation. Return to the step of determining, based on a power demand parameter of a grid system, an operation state of the grid system in a case that a confirmation instruction in response to the increased-power operation request is received.

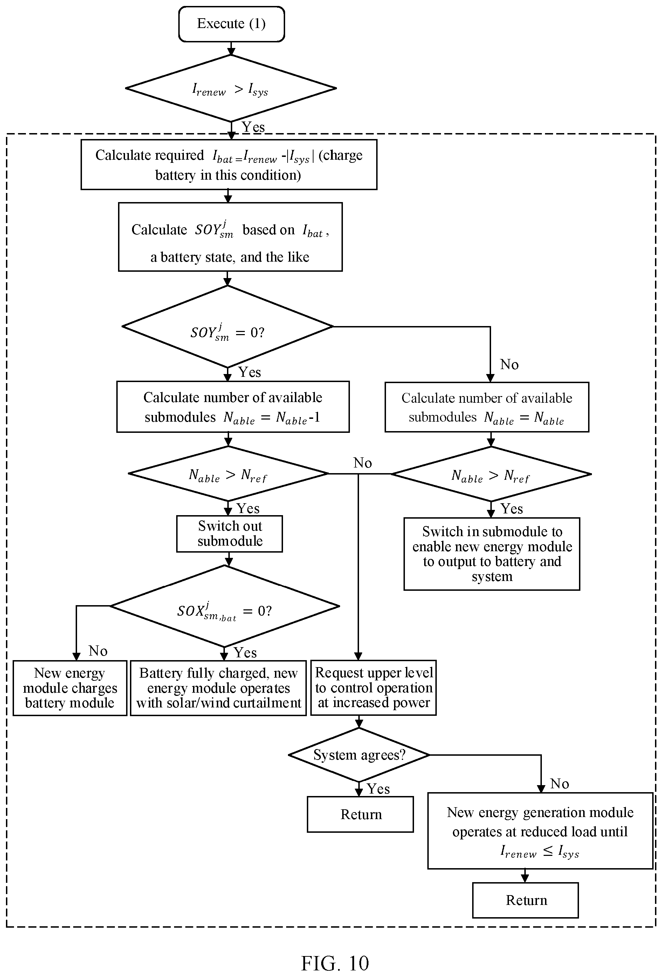

The increased-power operation request is a request for the grid system to operate at increased power. Referring to FIG. 10, in the solution of this embodiment, in a case that the number of available new energy submodules is less than the number of submodules required to be put into operation, it indicates that even if the current new energy submodule is put into operation, the electric energy provided by the new energy storage system to the grid system cannot be fully consumed, that is, there is an excess of electric energy. To improve the utilization rate of electric energy, the control apparatus requests the grid system (upper-level control) to operate at increased power, so as to increase the consumption of electric energy and reduce the waste of output electric energy. If the upper-level control returns a confirmation instruction agreeing to execute the power increase control, the control apparatus returns to the operation of acquiring a power demand parameter of the grid system, to re-determine the operation state based on the power demand parameter, thereby performing switch-in/out control on the current new energy submodule.

In the above solution, in a case that the grid system is in power absorbing operation and the power demand parameter is less than the output state parameter, if the number of available submodules is less than or equal to the number of submodules required to be put into operation, it indicates that even if the current new energy submodule is switched into operation, the output of the new energy generation module is excessive. In this case, an increased-power operation request is output to enable the grid system to operate at increased power, consuming the electric energy output by the new energy generation module, thereby improving the utilization rate of electric energy.

Referring to FIG. 9, in some embodiments, after Step 802, the method further includes Step 804.

Step 804. In a case that a confirmation instruction in response to the increased-power operation request is not received, control a new energy generation module of a new energy submodule to operate at reduced load until the output state parameter is less than or equal to the power demand parameter.

In the solution of the embodiments of this application, in a case that the output of the new energy generation module is excessive, the grid system is preferentially requested to operate at increased power to consume the excess electric energy. If the grid system does not agree to operate at increased power, that is, a confirmation instruction in response to the increased-power operation request is not received, to reduce the waste of electric energy, in the solution of this embodiment, the control apparatus controls the new energy generation module to operate at reduced load, ultimately making the output state parameter less than or equal to the power demand parameter, for example, the output current being less than or equal to the current parameter. After the reduced load operation makes the output state parameter less than or equal to the power demand parameter, the control apparatus returns to the operation of determining, based on a power demand parameter of a grid system, an operation state of the grid system, to re-determine the operation state of the energy storage system.

In the above solution, if the grid system does not agree to the output increased-power operation request, the new energy generation module used for power generation in the new energy submodule is controlled to operate at reduced load, reducing the output electric energy of the new energy generation module, thereby improving the operational safety of the new energy storage system.

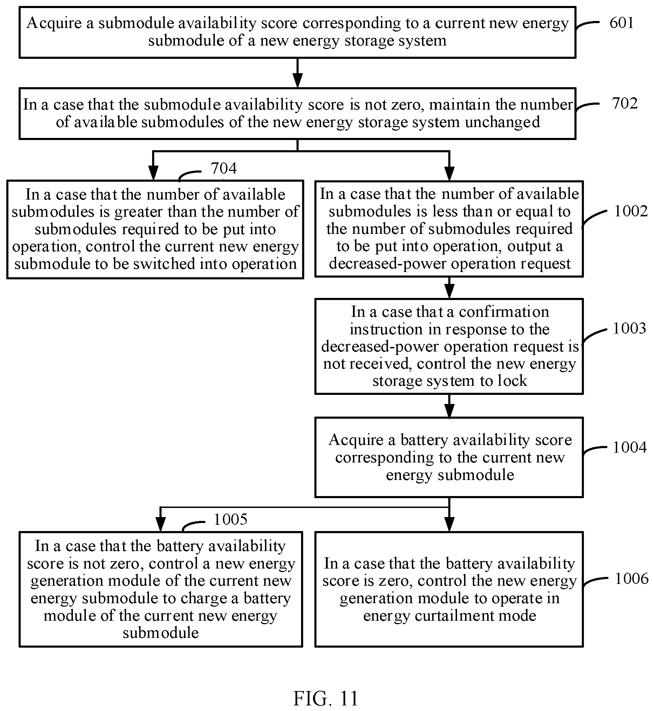

Referring to FIG. 11, in some embodiments, in a case that the operation state includes power absorbing operation and the power demand parameter is greater than the output state parameter, after Step 602 or Step 702, the method further includes Step 1002.

Step 1002. Output a decreased-power operation request in a case that the number of available submodules is less than or equal to the number of submodules required to be put into operation. Return to the step of determining, based on a power demand parameter of a grid system, an operation state of the grid system in a case that a confirmation instruction in response to the decreased-power operation request is received.

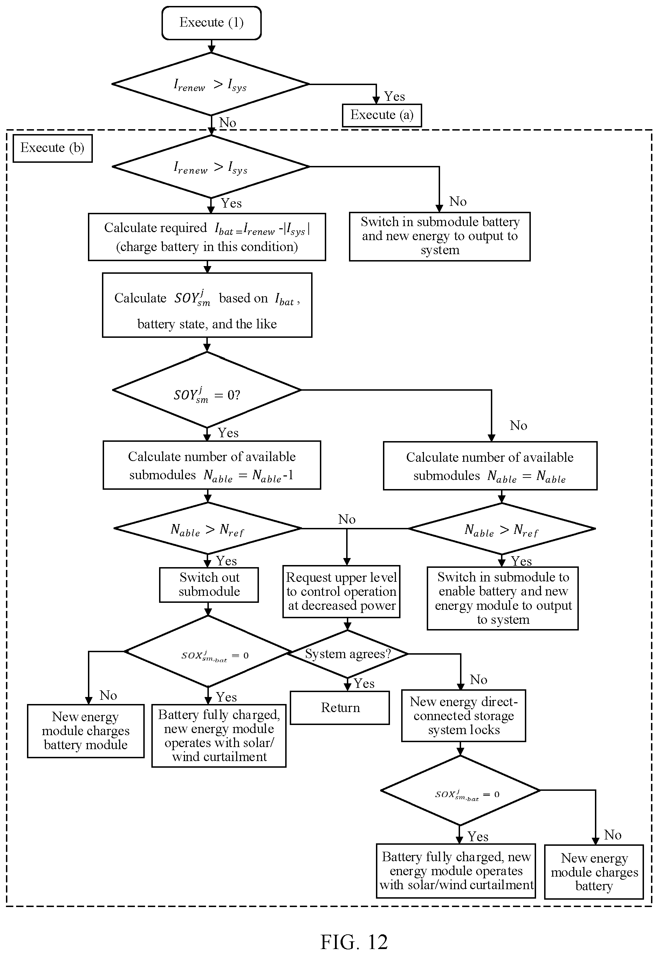

The decreased-power operation request is a request for the grid system to operate at decreased power. Referring to FIG. 12, in the solution of this embodiment, in a case that the number of available new energy submodules is less than the number of submodules required to be put into operation, it indicates that even if the current new energy submodule is put into operation, the electric energy provided by the new energy storage system still cannot meet the demand of the grid system. To improve the utilization rate of electric energy, the control apparatus requests the grid system (upper-level control) to operate at decreased power, so as to reduce the consumption of electric energy. If the upper-level control returns a confirmation instruction agreeing to execute the power decrease control, the control apparatus returns to the operation of determining, based on a power demand parameter of a grid system, an operation state of the grid system, to re-determine the operation state based on the power demand parameter.

In the above solution, in a case that the grid system is in power absorbing operation and the power demand parameter is greater than the output state parameter, if the number of available submodules is less than or equal to the number of submodules required to be put into operation, it indicates that even if the current new energy submodule is switched into operation, the output of the new energy generation module cannot meet the demand. In this case, a decreased-power operation request is output to enable the grid system to operate at decreased power, reducing the consumption of electric energy output by the new energy generation module, thereby improving the operational reliability of the new energy storage system.

Referring to FIG. 11, in some embodiments, after Step 1002, the method further includes Step 1003, Step 1004, Step 1005, and Step 1006.

Step 1003. In a case that a confirmation instruction in response to the decreased-power operation request is not received, control the new energy storage system to lock.

Step 1004. Acquire the battery availability score corresponding to the current new energy submodule.

Step 1005. In a case that the battery availability score is not zero, control a new energy generation module of the current new energy submodule to charge the battery module of the current new energy submodule.

Step 1006. In a case that the battery availability score is zero, control the new energy generation module to operate in energy curtailment mode.

In the solution of this embodiment, in a case that the output of the new energy generation module cannot meet the demand of the grid system, the grid system is preferentially requested to operate at decreased power. If the grid system does not agree to operate at decreased power, that is, a confirmation instruction in response to the decreased-power operation request is not received, in the solution of this embodiment, the control apparatus controls the new energy storage system to lock directly.

Subsequently, to minimize the occurrence of the new energy generation module operating with energy curtailment, the control apparatus determines the battery availability score of the current new energy submodule. If the battery module is available, the new energy generation module is controlled to output electric energy to charge the battery module of the current new energy submodule; if the battery module is not available (including the case that the battery module is fully charged), the energy curtailment operation control of the new energy generation module is executed.

In the above solution, if the grid system does not agree to the output decreased-power operation request, the new energy storage system is controlled to lock, improving the operational safety of the new energy storage system. Through further analysis of the battery availability score of the current new energy submodule, the new energy generation module charges the battery module of the new energy submodule, maximizing the possibility of the new energy generation module operating without energy curtailment.

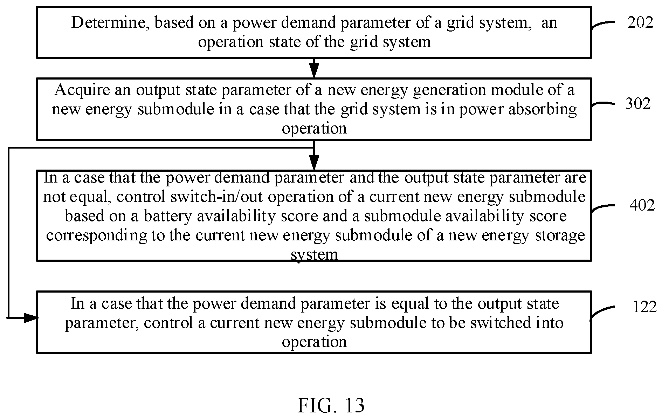

Referring to FIG. 13, in some embodiments, Step 304 further includes Step 122.

Step 122. In a case that the power demand parameter is equal to the output state parameter, control the current new energy submodule to be switched into operation.

In the solution of this embodiment, after obtaining the power demand parameter and the output state parameter, the control apparatus compares them. If the power demand parameter is less than the output state parameter, the control policy shown in FIG. 10 is executed; if the power demand parameter is greater than the output state parameter, the control policy shown in FIG. 12 is executed. In a case that the power demand parameter is equal to the output state parameter, there is no need to further analyze the new energy submodule, and the current new energy submodule is directly controlled to be switched into operation, supplying power to the grid system through the new energy generation module.

In the above solution, in a case that the power demand parameter is equal to the output state parameter, the current new energy submodule is directly controlled to be switched into operation, providing electric energy to the grid system through the new energy generation module, thereby improving the utilization rate of the new energy generation module.

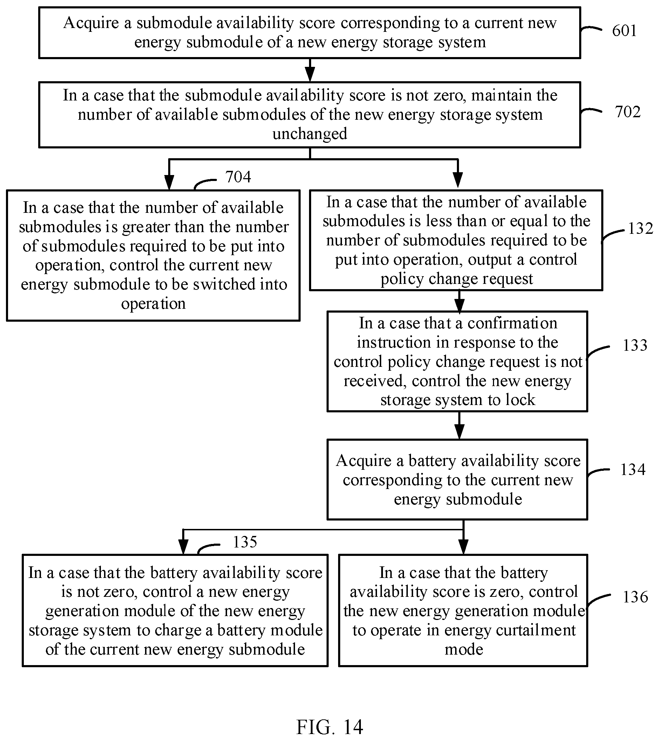

Referring to FIG. 14, in some embodiments, in a case that the operation state includes power emitting operation, after Step 602 or Step 702, the method further includes Step 132.

Step 132. Output a control policy change request in a case that the number of available submodules is less than or equal to the number of submodules required to be put into operation. Return to the step of acquiring an output state parameter of a new energy generation module of the new energy submodule in a case that a confirmation instruction in response to the control policy change request is received.

The control policy change request is a signal for requesting to change the switch-in/out policy of the new energy submodule of the new energy storage system. In the solution of this embodiment, in a case that the grid system is in the power emitting operation, if it is detected that the number of available submodules is less than or equal to the number of submodules required to be put into operation, the control apparatus requests to change the control policy, that is, changing to the control policy corresponding to the state that the grid system is in power absorbing operation, which is specifically, performing the corresponding switch-in/out control based on the magnitude relationship between the output state parameter and the operation state parameter, in combination with the submodule availability score and the battery availability score of the current new energy submodule.

In the above solution, in the case of power emitting operation, if it is detected that the number of available submodules is less than or equal to the number of submodules required to be put into operation, the control policy is changed. Based on the received confirmation instruction, the process returns to the operation of acquiring an output state parameter of a new energy generation module of the new energy storage system connected to the grid system, that is, performing switch-in/out control according to the control policy under power absorbing operation, improving the operational reliability of the new energy storage system.

Referring to FIG. 14, in some embodiments, after Step 132, the method further includes Step 133, Step 134, Step 135, and Step 136.

Step 133. In a case that a confirmation instruction in response to the control policy change request is not received, control the new energy storage system to lock.

Step 134. Acquire the battery availability score corresponding to the current new energy submodule.

Step 135. In a case that the battery availability score is not zero, control the new energy generation module of the new energy storage system to charge the current new energy submodule.

Step 136. In a case that the battery availability score is zero, control the new energy generation module to operate in energy curtailment mode.

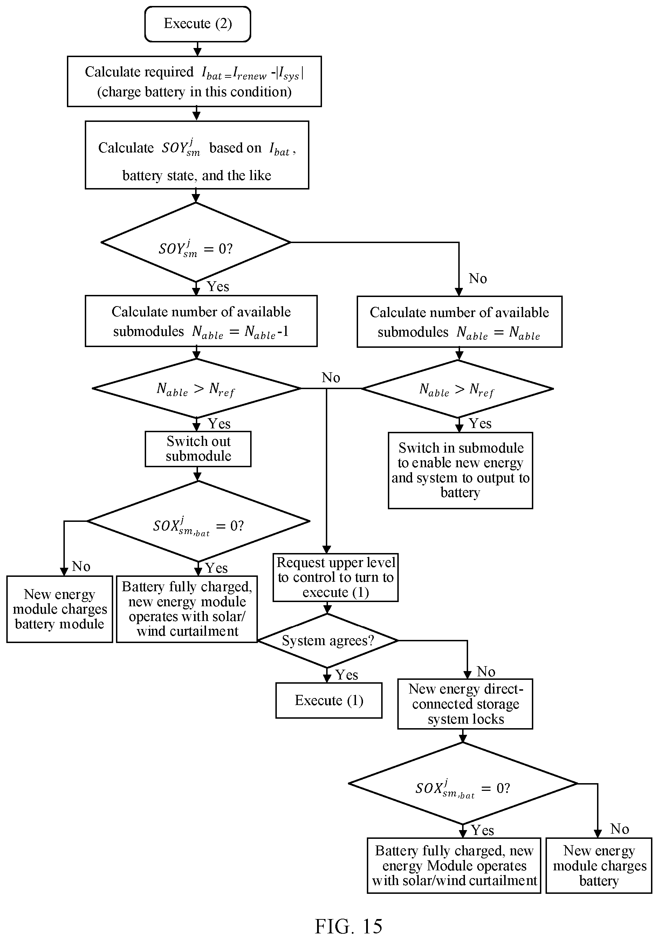

Referring to FIG. 15, in the solution of this embodiment, in a case that the control policy change is not approved (that is, a confirmation instruction in response to the control policy change request is not received), the control apparatus directly locks the new energy storage system. Subsequently, to minimize the occurrence of the new energy generation module operating with energy curtailment, the control apparatus determines the battery availability score of the current new energy submodule. If the battery module is available, the new energy generation module is controlled to output electric energy to charge the battery module of the current new energy submodule; if the battery module is not available (including the case that the battery module is fully charged), the energy curtailment operation control of the new energy generation module is executed.

In the above solution, if the output control policy change request is not approved, the new energy storage system is controlled to lock, improving the operational safety of the new energy storage system. Through further analysis of the battery availability score of the current new energy submodule, the new energy generation module charges the battery module of the new energy submodule, maximizing the possibility of the new energy generation module operating without energy curtailment.

In some embodiments, a method for determining the battery availability score includes: performing a weighted analysis based on at least one of a state of charge, a battery power capability parameter, and a battery health state of the current new energy submodule to determine the battery availability score.

The battery power capability parameter is a power-related parameter of the battery module during the charging and discharging process, including but not limited to rated power of the battery and maximum output power of the battery, which is not specifically limited. The method for determining the battery availability score is not limited, as long as it is a type of battery parameter that changes during the charging and discharging process of the battery. In the solution of this embodiment, a weighted calculation is performed based on one or more of the state of charge, the battery power capability parameter, and the battery health state to ultimately determine the battery availability score.

In the above solution, a weighted calculation is performed based on at least one of the state of charge, the battery power capability parameter, and the battery health state to obtain the battery availability score, making the battery availability score match the current new energy submodule, thereby improving the accuracy of the battery availability score.

In some embodiments, a method for determining the submodule availability score includes: determining a charge-discharge battery demand parameter based on the power demand parameter and the output state parameter; and performing a weighted analysis based on at least one of the charge-discharge battery demand parameter, an output performance parameter of the new energy generation module in the current new energy submodule, and the state of charge, the battery power capability parameter, a battery charge-discharge current, and the battery health state of the current new energy submodule to determine the submodule availability score.

The output performance parameter of the new energy generation module is a parameter related to output performance of the new energy generation module. It may include a current output power parameter, achievable output power parameters under different environmental conditions, an output power parameter predicted for a future moment based on the current environment, or the like, which is not specifically limited.

In the solution of this embodiment, description is provided by taking the power demand parameter, the output state parameter as current, and the charge-discharge battery demand parameter as current as an example. The control apparatus first determines the charge-discharge battery demand parameter based on the power demand parameter and the output state parameter. Specifically, depending on the charge-discharge state of the battery module, the method for determining the charge-discharge battery demand parameter differs. When the battery module is in a charging state, the method for determining the charge-discharge battery demand parameter includes: *I_{bat}* = *I_{renew}*-|*I_{sys}*|, where *I_{bat}* represents the charge-discharge battery demand parameter, *I_{renew}* represents the output state parameter, and *I_{sys}* represents the power demand parameter. When the battery module is in a charging state, the method for determining the charge-discharge battery demand parameter includes: *I_{bat}* = *I_{renew}*-(-|*I_{sys}*|).

Finally, the control apparatus performs a weighted analysis calculation based on one or more of the charge-discharge battery demand parameter, the output performance parameter of the new energy generation module, the state of charge, the battery power capability parameter, the battery charge-discharge current, and the battery health state to obtain the submodule availability score.

It can be understood that the weighted calculation method for the submodule availability score is not limited. In some embodiments, assuming that a weighted calculation is performed based on the charge-discharge battery demand parameter, the output performance parameter of the new energy generation module, the state of charge, the battery power capability parameter, the battery charge-discharge current, and the battery health state, the calculation method may be: a× *I_{bat}*+b×P1+c×SOC+d×P2+e×I+f×SOH, where a, b, c, d, e, and f are all constants greater than zero and less than 1, and a+b+c+d+e+f=1, *I_{bat}* represents the charge-discharge battery demand parameter, P1 represents the output performance parameter of the new energy generation module, SOC represents the state of charge, P2 represents the battery power capability parameter, I represents the battery charge-discharge current, and SOH represents the battery health state.

In other embodiments, any two, three, four, five, or six of the charge-discharge battery demand parameter, the output performance parameter of the new energy generation module, the state of charge, the battery power capability parameter, the battery charge-discharge current, and the battery health state can be selected for calculation using a weighted analysis method similar to that described above, which is not repeated herein.

In the above solution, a weighted calculation is performed based on at least one of the current parameter, the output performance parameter of the new energy generation module, the state of charge, the battery power capability parameter, the battery charge-discharge current, and the battery health state to obtain the submodule availability score, making the submodule availability score more aligned with the new energy storage system, thereby improving the accuracy of the submodule availability score.

It should be understood that although the steps in the flowcharts involved in the above embodiments are shown sequentially as indicated by arrows, these steps are not necessarily executed in the order indicated by the arrows. Unless explicitly stated herein, there is no strict order restriction on the execution of these steps, and these steps can be executed in other orders. Moreover, at least some of the steps in the flowcharts involved in the above embodiments may include multiple steps or multiple stages. These steps or stages are not necessarily executed at the same time but can be executed at different times. The execution order of these steps or stages is not necessarily sequential but can be executed alternately or in rotation with other steps or at least a part of the steps or stages in other steps.

For ease of understanding the technical solutions of this application, the following describes this application with reference to more detailed embodiments.

Referring to FIG. 10, FIG. 12, FIG. 15, and FIG. 16, first, the control apparatus acquires a power demand parameter of the grid system (including a power parameter *P_{sys}* and a current parameter *I_{sys}*) to determine an operation state of the grid system. If *P_{sys}*>0 or *I_{sys}*>0, it is determined that the grid system is in power absorbing operation; otherwise, the grid system is considered to be in power emitting operation.

In a case that the grid system is in power absorbing operation, (1) is executed. An output state parameter (including an output power *I_{renew}* and an output current *I_{renew}*) of the new energy generation module (a new energy generation module connected to the current new energy submodule). The control apparatus determines whether *I_{renew}* is greater than *I_{sys}*. If they are equal, the current new energy submodule is directly controlled to be switched into operation.

If *I_{renew}* > *I_{sys}*, based on *I_{bat}* = *I_{renew}*-|*I_{sys}*|, the charge-discharge battery demand parameter *I_{bat}* is calculated. A weighted calculation is performed based on *I_{bat}* and at least one of the output performance parameter of the new energy generation module in the current new energy submodule, and the state of charge, the battery power capability parameter, the battery charge-discharge current, and the battery health state of the current new energy submodule to obtain the submodule availability score *I_{renew}* of the current new energy submodule.

Then it is determined whether *I_{renew}* is equal to 0. If it is equal to zero, it indicates that the current new energy submodule is not available, and the number *N_{able}* of available submodules is reduced by one based on the original number, that is, *N_{able} = N_{able}-*1*.* Then it is determined whether the updated *N_{able}* is greater than the number *N_{ref}* of submodules required to be put into operation (which can be calculated based on the current voltage demand). If *N_{able} > N_{ref},* the current new energy submodule is switched out of operation, and a weighted analysis is performed further based on at least one of the state of charge, the battery power capability parameter, and the battery health state of the current new energy submodule to obtain the battery availability score ${SOX}_{sm {,}_{bat}}^{j}$*.* It is determined whether ${SOX}_{sm {,}_{bat}}^{j}$ is equal to zero. If ${SOX}_{sm {,}_{bat}}^{j}$ is not equal to 0, it indicates that the battery module of the current new energy submodule is available. In this case, the control apparatus controls the new energy generation module to charge the battery module until it is fully charged. If ${SOX}_{sm {,}_{bat}}^{j}$ is equal to zero, it indicates that the battery module is in a fully charged state, and the control apparatus controls the new energy generation module to operate in wind curtailment or solar curtailment mode.

In a case that ${SOY}_{sm}^{j}$ is not 0, the current new energy submodule is available. In this case, *N_{able}* remains unchanged, that is, *N_{able} = N_{able}.* The control apparatus also needs to determine whether *N_{able}* is greater than the number *N_{ref}* of submodules required to be put into operation. If *N_{able} > N_{ref},* the current new energy submodule is switched into operation, enabling the new energy generation module to supply power to both the grid system and the current battery module.

Regardless of whether *N_{able}* changes, when it is determined that *N_{able} > N_{ref}, if N_{able}* ≤ *N_{ref}* occurs, the control apparatus outputs a power increase request to the grid system. If the grid system agrees, the process returns to the operation of acquiring the power demand parameter of the grid system to re-determine the switch-in/out of the current new energy submodule. If the grid system does not agree, the new energy generation module is controlled to operate at reduced load until *I_{renew}* ≤ *I_{sys} ,* then the process returns to the operation of acquiring the power demand parameter of the grid system to re-determine the switch-in/out of the current new energy submodule.

If *I_{renew} < I_{sys},* the charge-discharge battery demand parameter *I_{bat}* is calculated based on *I_{bat} = I_{renew}-*|*L_{sys}*|, and the current submodule availability score ${SOY}_{sm}^{j}$ is calculated based on *I_{bat}* (the calculation method is similar to that described above and is not repeated). Then it is determined whether ${SOY}_{sm}^{j}$ is equal to 0. If it is zero, it indicates that the current new energy submodule is not available, and the number *N_{able}* of available submodules is reduced by one based on the original number, that is, *N_{able} = N_{able}-*1*.* Then it is determined whether the updated *N_{able}* is greater than the number *N_{ref}* of submodules required to be put into operation. If *N_{able} > N_{ref},* the current new energy submodule is switched out of operation, and the battery availability score ${SOX}_{sm {,}_{bat}}^{j}$ is further calculated (the calculation method is similar to that described above and is not repeated). It is determined whether ${SOX}_{sm {,}_{bat}}^{j}$ is equal to 0. If ${SOX}_{sm {,}_{bat}}^{j}$ is not equal to 0, it indicates that the battery module of the current new energy submodule is available. In this case, the control apparatus controls the new energy generation module to charge the battery module until it is fully charged. If ${SOX}_{sm {,}_{bat}}^{j}$ is equal to zero, it indicates that the battery module is in a fully charged state, and the control apparatus controls the new energy generation module to operate in wind curtailment or solar curtailment mode.

In a case that ${SOY}_{sm}^{j}$ is not 0, the current new energy submodule is available. In this case, *N_{able}* remains unchanged, that is, *N_{able} = N_{able}.* The control apparatus also needs to determine whether *N_{able}* is greater than the number *N_{ref}* of submodules required to be put into operation. If *N_{able} > N_{ref} ,* the current new energy submodule is switched into operation, enabling the new energy generation module to supply power to both the grid system and the battery module of the current new energy submodule.

Regardless of whether *N_{able}* changes, when it is determined that *N_{able} > N_{ref}, if N_{able}* ≤ *N_{ref}* occurs, the control apparatus outputs a power decrease request to the grid system. If the grid system agrees, the process returns to the operation of acquiring the power demand parameter of the grid system to re-determine the switch-in/out of the current new energy submodule. If the grid system does not agree, the new energy storage system is controlled to lock, and the battery availability score ${SOX}_{sm {,}_{bat}}^{j}$ is further calculated (the calculation method is similar to that described above and is not repeated). It is determined whether ${SOX}_{sm {,}_{bat}}^{j}$ is equal to zero. If ${SOX}_{sm {,}_{bat}}^{j}$ is not equal to 0, it indicates that the battery module of the current new energy submodule is available. In this case, the control apparatus controls the new energy generation module to charge the battery module until it is fully charged. If ${SOX}_{sm {,}_{bat}}^{j}$ is equal to zero, it indicates that the battery module is in a fully charged state, and the control apparatus controls the new energy generation module to operate in wind curtailment or solar curtailment mode.

In a case that the grid system is in power absorbing operation, (2) is executed. The charge-discharge battery demand parameter *I_{bat}* is calculated based on *I_{bat} = I_{renew}-*(*-*|*I_{sys}*|). The submodule availability score ${SOY}_{sm}^{j}$ of the current new energy submodule is calculated based on *I_{bat}* (the specific calculation method is consistent with that described above and is not repeated). Then it is determined whether ${SOY}_{sm}^{j}$ is equal to 0. If it is equal to zero, it indicates that the current new energy submodule is not available, and the number *N_{able}* of available submodules is reduced by one based on the original number, that is, *N_{able} = N_{able}-*1*.* Then it is determined whether the updated *N_{able}* is greater than the number *N_{ref}* of submodules required to be put into operation. If *N_{able} > N_{ref},* the current new energy submodule is switched out of operation, and the battery availability score ${SOX}_{sm {,}_{bat}}^{j}$ is further calculated (the calculation method is similar to that described above and is not repeated). It is determined whether ${SOX}_{sm {,}_{bat}}^{j}$ is equal to zero. If ${SOX}_{sm {,}_{bat}}^{j}$ is not equal to 0, it indicates that the battery module of the current new energy submodule is available. In this case, the control apparatus controls the new energy generation module to charge the battery module until it is fully charged. If ${SOX}_{sm {,}_{bat}}^{j}$ is zero, it indicates that the battery module is in a fully charged state, and the control apparatus controls the new energy generation module to operate in wind curtailment or solar curtailment mode.

In a case that ${SOY}_{sm}^{j}$ is not 0, the current new energy submodule is available. In this case, *N_{able}* remains unchanged, that is, *N_{able} = N_{able}.* The control apparatus also needs to determine whether *N_{able}* is greater than the number *N_{ref}* of submodules required to be put into operation. If *N_{able} > N_{ref},* the current new energy submodule is switched into operation, enabling the new energy generation module to supply power to both the grid system and the battery module of the current new energy submodule.

Regardless of whether *N_{able}* changes, when it is determined that *N_{able} > N_{ref}, if N_{able}* ≤ *N_{ref}* occurs, the control apparatus outputs a control policy change request to change to execute (1). If changing to execute (1) is approved, the process jumps to the operation of acquiring the output state parameter of the new energy generation module in (1). If changing to execute (1) is not approved, the new energy storage system is controlled to lock, and the battery availability score ${SOX}_{sm {,}_{bat}}^{j}$ is further calculated (the calculation method is similar to that described above and is not repeated). It is determined whether ${SOX}_{sm {,}_{bat}}^{j}$ is equal to zero. If ${SOX}_{sm {,}_{bat}}^{j}$ is not equal to 0, it indicates that the battery module of the current new energy submodule is available. In this case, the control apparatus controls the new energy generation module to charge the battery module until it is fully charged. If ${SOX}_{sm {,}_{bat}}^{j}$ is zero, it indicates that the battery module is in a fully charged state, and the control apparatus controls the new energy generation module to operate in wind curtailment or solar curtailment mode.

Based on the same inventive concept, an embodiment of this application further provides an energy storage operation apparatus for implementing the foregoing energy storage operation method. The solutions provided by the apparatus are similar to the solutions described in the foregoing method. Therefore, for the specific limitations in one or more storage operation embodiments provided below, reference may be made to the limitations on the energy storage operation method above, and details are not repeated herein.

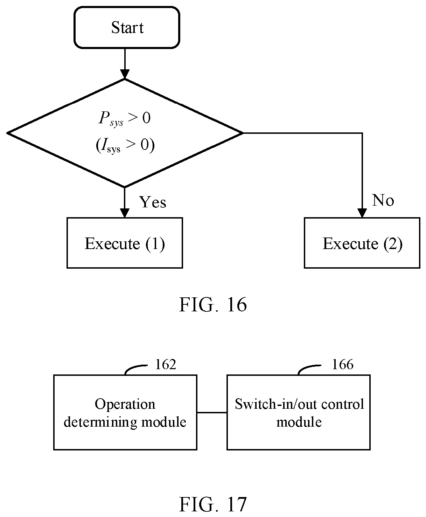

Referring to FIG. 17, this application further provides an energy storage operation apparatus, including: an operation determining module 162 and a switch-in/out control module 166.

The operation determining module 162 is configured to determine, based on a power demand parameter of a grid system, an operation state of the grid system; the switch-in/out control module 166 is configured to control switch-in/out operation of a new energy submodule of a new energy storage system connected to the grid system based on the operation state, in combination with a battery availability score and a submodule availability score of the new energy submodule.

In some embodiments, the operation state includes power absorbing operation, and the switch-in/out control module 166 is further configured to acquire an output state parameter of a new energy generation module of the new energy submodule in the new energy storage system connected to the grid system in a case that the grid system is in power absorbing operation; and control the switch-in/out operation of the new energy submodule of the new energy storage system based on the power demand parameter and the output state parameter, in combination with the battery availability score and the submodule availability score of the new energy submodule.

In some embodiments, the switch-in/out control module 166 is further configured to control the switch-in/out operation of a current new energy submodule based on the battery availability score and the submodule availability score corresponding to the current new energy submodule of the new energy storage system when the power demand parameter and the output state parameter are not equal.

In some embodiments, the operation state includes power emitting operation, and the switch-in/out control module 166 is further configured to control the switch-in/out operation of the current new energy submodule based on the battery availability score and the submodule availability score corresponding to the current new energy submodule of the new energy storage system in a case that the grid system is in the power emitting operation.

In some embodiments, the switch-in/out control module 166 is further configured to acquire the submodule availability score corresponding to the current new energy submodule of the new energy storage system; in a case that the submodule availability score is zero, reduce the number of available submodules of the new energy storage system by one; in a case that the number of available submodules is greater than the number of submodules required to be put into operation, control the current new energy submodule to be switched out of operation; acquire the battery availability score corresponding to the current new energy submodule of the new energy storage system; and in a case that the battery availability score is not zero, control a new energy generation module of the current new energy submodule to charge a battery module of the current new energy submodule; or in a case that the battery availability score is zero, control the new energy generation module to operate in energy curtailment mode.

In some embodiments, the switch-in/out control module 166 is further configured to: in a case that the submodule availability score is not zero, maintain the number of available submodules of the new energy storage system unchanged; and in a case that the number of available submodules is greater than the number of submodules required to be put into operation, control the current new energy submodule to be switched into operation.

In some embodiments, the switch-in/out control module 166 is further configured to output an increased-power operation request in a case that the number of available submodules is less than or equal to the number of submodules required to be put into operation; and in a case that a confirmation instruction in response to the increased-power operation request is received, control the operation determining module 162 to execute the operation of determining, based on a power demand parameter of a grid system, an operation state of the grid system.

In some embodiments, the switch-in/out control module 166 is further configured to: in a case that a confirmation instruction in response to the increased-power operation request is not received, control the new energy generation module of the new energy submodule to operate at reduced load until the output state parameter is less than or equal to the power demand parameter.

In some embodiments, the switch-in/out control module 166 is further configured to output a decreased-power operation request in a case that the number of available submodules is less than or equal to the number of submodules required to be put into operation; and control the operation determining module 162 to execute the operation of determining, based on a power demand parameter of a grid system, an operation state of the grid system, in a case that a confirmation instruction in response to the decreased-power operation request is received.

In some embodiments, the switch-in/out control module 166 is further configured to: in a case that a confirmation instruction in response to the decreased-power operation request is not received, control the new energy storage system to lock; acquire the battery availability score corresponding to the current new energy submodule; and in a case that the battery availability score is not zero, control the new energy generation module of the current new energy submodule to charge the battery module of the current new energy submodule; or in a case that the battery availability score is zero, control the new energy generation module to operate in energy curtailment mode.

In some embodiments, the switch-in/out control module 166 is further configured to: in a case that the power demand parameter is equal to the output state parameter, control the current new energy submodule to be switched into operation.

In some embodiments, the switch-in/out control module 166 is further configured to output a control policy change request in a case that the number of available submodules is less than or equal to the number of submodules required to be put into operation; and control the operation determining module 162 to perform the operation of determining, based on a power demand parameter of a grid system, an operation state of the grid system, in a case that a confirmation instruction in response to the control policy change request is received.

In some embodiments, the switch-in/out control module 166 is further configured to: in a case that a confirmation instruction in response to the control policy change request is not received, control the new energy storage system to lock; acquire the battery availability score corresponding to the current new energy submodule; and in a case that the battery availability score is not zero, control the new energy generation module of the current new energy submodule to charge the battery module of the current new energy submodule; or in a case that the battery availability score is zero, control the new energy generation module to operate in energy curtailment mode.

In the above energy storage operation apparatus, in a case that the new energy storage system is connected to the grid system for operation, the operation state of the current grid system can be determined based on the power demand parameter of the grid system. Subsequently, based on the operation state of the grid system, a control policy is determined to control the switch-in/out operation of each new energy submodule in the new energy storage system. In this way, the switch-in/out operation of the new energy submodule in the new energy storage system can be automatically matched and controlled based on the operation state of the grid system without manual intervention, alleviating the problem of low scheduling efficiency in new energy storage systems.

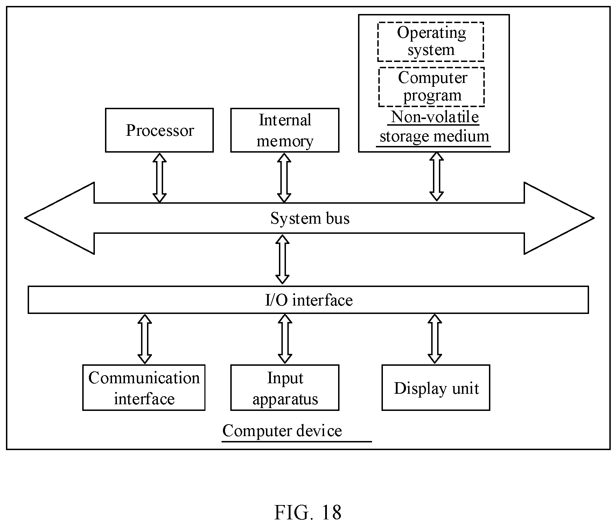

In some embodiments, this application provides a computer device. The computer device may be a terminal, and its internal structure may be as shown in FIG. 18. The computer device includes a processor, a memory, a communication interface, a display, and an input apparatus connected through a system bus. The processor of the computer device is configured to provide computing and control capabilities. The memory of the computer device includes a non-volatile storage medium and an internal memory. The non-volatile storage medium stores an operating system and a computer program. The internal memory provides an environment for the operation of the operating system and the computer program in the non-volatile storage medium. The communication interface of the computer device is configured for wired or wireless communication with an external terminal, where the wireless communication may be implemented through Wi-Fi, a mobile cellular network, NFC (near field communication), or other technologies. The computer program, when executed by the processor, implements an energy storage operation method. The display of the computer device may be a liquid crystal display or an electronic ink display. The input apparatus of the computer device may be a touch layer covering the display, or may be a key, a trackball, or a touchpad provided on a housing of the computer device, or may be an external keyboard, a touchpad, a mouse, or the like.

Those skilled in the art can understand that the structure shown in FIG. 18 is only a block diagram of a part of the structure related to the solution of this application and does not constitute a limitation on the computer device to which the solution of this application is applied. The specific computer device may include more or fewer components than shown in the figure, or combine some components, or have a different arrangement of components.

In some embodiments, a computer device is provided, including a memory and a processor. The memory stores a computer program, and the processor executes the computer program to implement the following steps:
determining, based on a power demand parameter of a grid system, an operation state of the grid system; and controlling switch-in/out operation of a new energy submodule based on the operation state, in combination with a battery availability score and a submodule availability score of the new energy submodule.

In some embodiments, a computer-readable storage medium is provided, having a computer program stored thereon. The computer program, when executed by a processor, implements the following steps:
determining, based on a power demand parameter of a grid system, an operation state of the grid system; and controlling switch-in/out operation of a new energy submodule based on the operation state, in combination with a battery availability score and a submodule availability score of the new energy submodule.

In some embodiments, this application provides a computer program product, including a computer program. The computer program, when executed by a processor, implements the following steps:
determining, based on a power demand parameter of a grid system, an operation state of the grid system; and controlling switch-in/out operation of a new energy submodule based on the operation state, in combination with a battery availability score and a submodule availability score of the new energy submodule.

In the foregoing computer device, storage medium, and computer program product, in a case that the new energy storage system is connected to the grid system for operation, the operation state of the current grid system can be determined based on the power demand parameter of the grid system. Subsequently, based on the operation state of the grid system, a control policy is determined to control the switch-in/out operation of each new energy submodule in the new energy storage system. In this way, the switch-in/out operation of the new energy submodule in the new energy storage system can be automatically matched and controlled based on the operation state of the grid system without manual intervention, alleviating the problem of low scheduling efficiency in new energy storage systems.

Finally, it should be noted that the above embodiments are only used to illustrate the technical solutions of this application and not to limit them. Although this application has been described in detail with reference to the foregoing embodiments, those of ordinary skill in the art should understand that modifications can still be made to the technical solutions described in the foregoing embodiments, or equivalent replacements can be made to some or all of the technical features. These modifications or replacements do not make the essence of the corresponding technical solutions depart from the scope of the technical solutions of the embodiments of this application and should be covered within the scope of the claims and specification of this application. In particular, as long as there is no structural conflict, the technical features mentioned in the various embodiments can be combined in any manner. This application is not limited to the specific embodiments disclosed herein but includes all technical solutions falling within the scope of the claims.

## Claims

1. A new energy storage system, comprising a control apparatus and a new energy submodule, wherein the new energy submodule comprises a power module, a battery module, and a new energy generation module, wherein the battery module is connected to both the power module and the new energy generation module, and the power module and the new energy generation module are both connected to the control apparatus.

2. The new energy storage system according to claim 1, wherein the new energy submodule further comprises a converter, wherein the battery module is connected to the new energy generation module through the converter, and the converter is connected to the control apparatus.

3. The new energy storage system according to claim 2, wherein the converter comprises at least one of a direct current converter and an alternating current/direct current converter.

4. The new energy storage system according to any one of claims 1 to 3, wherein power modules of adjacent new energy submodules are sequentially cascaded and connected to a grid system.

5. The new energy storage system according to any one of claims 1 to 4, wherein the new energy generation module comprises at least one of a photovoltaic generation module, a wind power generation module, a tidal energy generation module, and a biomass energy generation module.

6. An energy storage operation method based on the new energy storage system according to any one of claims 1 to 5, comprising:
determining, based on a power demand parameter of a grid system, an operation state of the grid system; and
controlling switch-in/out operation of a new energy submodule based on the operation state, in combination with a battery availability score and a submodule availability score of the new energy submodule.

7. The energy storage operation method according to claim 6, wherein the operation state comprises power absorbing operation, and the controlling switch-in/out operation of a new energy submodule based on the operation state, in combination with a battery availability score and a submodule availability score of the new energy submodule comprises:
acquiring an output state parameter of a new energy generation module of the new energy submodule in a case that the grid system is in power absorbing operation; and
controlling the switch-in/out operation of the new energy submodule based on the power demand parameter and the output state parameter, in combination with the battery availability score and the submodule availability score of the new energy submodule.

8. The energy storage operation method according to claim 7, wherein the controlling the switch-in/out operation of the new energy submodule based on the power demand parameter and the output state parameter, in combination with the battery availability score and the submodule availability score of the new energy submodule comprises:
in a case that the power demand parameter and the output state parameter are not equal, controlling switch-in/out operation of a current new energy submodule based on a battery availability score and a submodule availability score corresponding to the current new energy submodule of the new energy storage system.

9. The energy storage operation method according to claim 6, wherein the operation state comprises power emitting operation, and the controlling switch-in/out operation of a new energy submodule based on the operation state, in combination with a battery availability score and a submodule availability score of the new energy submodule comprises:
in a case that the grid system is in the power emitting operation, controlling switch-in/out operation of a current new energy submodule based on a battery availability score and a submodule availability score corresponding to the current new energy submodule of the new energy storage system.

10. The energy storage operation method according to claim 8 or 9, wherein the controlling switch-in/out operation of a current new energy submodule based on a battery availability score and a submodule availability score corresponding to the current new energy submodule of the new energy storage system comprises:
acquiring the submodule availability score corresponding to the current new energy submodule of the new energy storage system;
in a case that the submodule availability score is zero, reducing the number of available submodules of the new energy storage system by one;
in a case that the number of available submodules is greater than the number of submodules required to be put into operation, controlling the current new energy submodule to be switched out of operation;
acquiring the battery availability score corresponding to the current new energy submodule of the new energy storage system; and
in a case that the battery availability score is not zero, controlling a new energy generation module of the current new energy submodule to charge a battery module of the current new energy submodule; or
in a case that the battery availability score is zero, controlling the new energy generation module to operate in energy curtailment mode.

11. The energy storage operation method according to claim 10, wherein after the acquiring the submodule availability score corresponding to the current new energy submodule of the new energy storage system, the method further comprises:
in a case that the submodule availability score is not zero, maintaining the number of available submodules of the new energy storage system unchanged; and
in a case that the number of available submodules is greater than the number of submodules required to be put into operation, controlling the current new energy submodule to be switched into operation.

12. The energy storage operation method according to claim 11, wherein in a case that the operation state comprises power absorbing operation and the power demand parameter is less than the output state parameter, after the reducing the number of available submodules of the new energy storage system by one in a case that the submodule availability score is zero, or after the maintaining the number of available submodules of the new energy storage system unchanged in a case that the submodule availability score is not zero, the method further comprises:
outputting an increased-power operation request in a case that the number of available submodules is less than or equal to the number of submodules required to be put into operation; and
returning to the step of determining, based on a power demand parameter of a grid system, an operation state of the grid system in a case that a confirmation instruction in response to the increased-power operation request is received.

13. The energy storage operation method according to claim 12, wherein after the outputting an increased-power operation request in a case that the number of available submodules is less than or equal to the number of submodules required to be put into operation, the method further comprises:
in a case that a confirmation instruction in response to the increased-power operation request is not received, controlling the new energy generation module of the new energy submodule to operate at reduced load until the output state parameter is less than or equal to the power demand parameter.

14. The energy storage operation method according to claim 11, wherein in a case that the operation state comprises power absorbing operation and the power demand parameter is greater than the output state parameter, after the reducing the number of available submodules of the new energy storage system by one in a case that the submodule availability score is zero, or after the maintaining the number of available submodules of the new energy storage system unchanged in a case that the submodule availability score is not zero, the method further comprises:
outputting a decreased-power operation request in a case that the number of available submodules is less than or equal to the number of submodules required to be put into operation; and
returning to the step of determining, based on a power demand parameter of a grid system, an operation state of the grid system, in a case that a confirmation instruction in response to the decreased-power operation request is received.

15. The energy storage operation method according to claim 14, wherein after the outputting a decreased-power operation request in a case that the number of available submodules is less than or equal to the number of submodules required to be put into operation, the method further comprises:
in a case that a confirmation instruction in response to the decreased-power operation request is not received, controlling the new energy storage system to lock;
acquiring the battery availability score corresponding to the current new energy submodule; and
in a case that the battery availability score is not zero, controlling the new energy generation module of the current new energy submodule to charge the battery module of the current new energy submodule; or
in a case that the battery availability score is zero, controlling the new energy generation module to operate in energy curtailment mode.

16. The energy storage operation method according to any one of claims 7 to 15, wherein the controlling the switch-in/out operation of the new energy submodule based on the power demand parameter and the output state parameter, in combination with the battery availability score and the submodule availability score of the new energy submodule further comprises:
in a case that the power demand parameter is equal to the output state parameter, controlling the current new energy submodule to be switched into operation.

17. The energy storage operation method according to claim 11, wherein in a case that the operation state comprises power emitting operation, after the reducing the number of available submodules of the new energy storage system by one in a case that the submodule availability score is zero, or after the maintaining the number of available submodules of the new energy storage system unchanged in a case that the submodule availability score is not zero, the method further comprises:
outputting a control policy change request in a case that the number of available submodules is less than or equal to the number of submodules required to be put into operation; and
returning to the step of acquiring an output state parameter of a new energy generation module of the new energy submodule in a case that a confirmation instruction in response to the control policy change request is received.

18. The energy storage operation method according to claim 17, wherein after the outputting a control policy change request in a case that the number of available submodules is less than or equal to the number of submodules required to be put into operation, the method further comprises:
in a case that a confirmation instruction in response to the control policy change request is not received, controlling the new energy storage system to lock;
acquiring the battery availability score corresponding to the current new energy submodule; and
in a case that the battery availability score is not zero, controlling the new energy generation module of the current new energy submodule to charge the battery module of the current new energy submodule; or
in a case that the battery availability score is zero, controlling the new energy generation module to operate in energy curtailment mode.

19. The energy storage operation method according to any one of claims 6 to 18, wherein a method for determining the battery availability score comprises:
performing a weighted analysis based on at least one of a state of charge, a battery power capability parameter, and a battery health state of the current new energy submodule to determine the battery availability score.

20. The energy storage operation method according to any one of claims 6 to 19, wherein a method for determining the submodule availability score comprises:
determining a charge-discharge battery demand parameter based on the power demand parameter and the output state parameter; and
performing a weighted analysis based on at least one of the charge-discharge battery demand parameter, an output performance parameter of the new energy generation module in the current new energy submodule, and the state of charge, the battery power capability parameter, a battery charge-discharge current, and the battery health state of the current new energy submodule to determine the submodule availability score.

21. An energy storage operation apparatus based on the new energy storage system according to any one of claims 1 to 5, comprising:
an operation determining module configured to determine, based on a power demand parameter of a grid system, an operation state of the grid system; and
a switch-in/out control module configured to control switch-in/out operation of a new energy submodule based on the operation state, in combination with a battery availability score and a submodule availability score of the new energy submodule.

22. A computer device, comprising a memory and a processor, wherein the memory stores a computer program, and when the processor executes the computer program, the steps of the energy storage operation method according to any one of claims 6 to 20 are implemented.

23. A computer-readable storage medium, wherein a computer program is stored on the computer-readable storage medium, and when the computer program is executed by a processor, the steps of the energy storage operation method according to any one of claims 6 to 20 are implemented.

24. A computer program product, comprising a computer program, wherein when the computer program is executed by a processor, the steps of the energy storage operation method according to any one of claims 6 to 20 are implemented.
